# EUROPEAN PATENT SPECIFICATION

(11) **EP 3 009 559 B1**
(45) Date of publication and mention of the grant of the patent: **05.04.2017**
(21) Application number: 15159351.4
(22) Date of filing: 17.03.2015
(51) Int. Cl.: D06Q 1/12, B32B 27/06, G02B 5/128, B32B 37/00, B32B 38/00, B32B 37/24

(54) **REFLECTIVE FABRIC WITH COLOR PRINTING AND FABRICATION METHOD THEREOF**
REFLEKTIERENDES GEWEBE MIT FARBDRUCK UND HERSTELLUNGSVERFAHREN DAFÜR
TISSU RÉFLÉCHISSANT AVEC IMPRESSION COULEUR ET SON PROCÉDÉ DE FABRICATION

(30) Priority: 14.10.2014 CN 201410541356
(43) Date of publication of application: 20.04.2016
(73) Proprietor: ZHEJIANG YGM TECHNOLOGY CO., LTD., Taizou, Zhejiang 318000 (CN)
(72) Inventor: CHEN, Guoshun, Jiaojiang, Taizhou Zheijang (CN)
(74) Representative: Sun, Yiming

(56) References cited:
- WO-A1-92/07990
- WO-A1-02/103108
- CN-U- 203 825 222
- US-A- 5 837 347
- US-A- 5 916 399

## Description

### Field of the Invention

The invention relates to a reflective fabric with color printing, a reflective fabric with color printing based on glass bead retro reflection technology used for night operation instruction and garment decoration, and belongs to the field of novel material fabrication.

### Background of the Invention

Since the reflective material has special properties of retro-reflection without providing energy by itself, it is widely used in the special fields of highway, spaceflight, night operation and garment decoration. Fabrication of reflective fabric involves a fabrication and combination process of a variety of materials. These materials include an optical reflection element, a bottom layer, a surface layer, a bonding layer and other auxiliary layers. Now, that mostly used in clothing associated industry is the reflective fabric with glass beads as the reflection element.

The existing reflective fabric can not meet development of the garment industry due to its color monotone, generally grey or silver grey or monotone multicolor and low reflection intensity. With the social progress and the advance of the modernized process, people increase pursuit for new garments, present particular requirements for the clothing material processing technology, and continuously improve safety and aesthetic consciousness, so use of reflective materials in clothing is a large fashion trend of international clothing and is the special embodiment of fashion and high grade.

The invention gives the surface of the material the printed patterns with retro-reflection property, bright color and rich content without changing the safety protection property of the reflective material, and makes the material be diverse and suitable for manufacturing various special clothing, textile materials, etc.

A method of fabrication an reflective fabric according to the preamble of claim 1 and according to the preamble of claim 4 is known from document WO-A-92/07990.

### Summary of the Invention

The technical problem solved by the invention is to provide a reflective fabric with color printing to solve problems in the background of the invention above.

The invention provides the following technical scheme: a reflective fabric with color printing, including a fabric layer, an elastic resin layer, a color printing layer and glass beads, wherein the fabric layer is connected with the elastic resin layer, the elastic resin layer is connected with the color printing layer, the glass beads are embedded in the color printing layer, and a reflective layer is set on the surface of the glass beads which embedded in the color printing layer. According to the invention the glass beads are solid spheroids with both ellpticity and devitrification rate less than or equal to 3% and have refractive index between 1.7 and 1.94.

Preferably, the fabric layer is blend-woven by one or more of polyester cotton , all cotton ,terylene ,spandex and acrylon.

Preferably, the elastic resin layer is a thermoplastic polyurethane elastomer layer or an acrylic elastomer layer.

Preferably, the color printing layer is formed by a combination of one or more of intaglio printing, silk screen printing, flexography printing , digital printing with transparent ink and combination thereof.

Preferably, the reflective layer is a colorless transparent coated hemispheroid or a grey coated hemispheroid, and the reflective layer has a thickness of 100-200 Å.

Preferably, the glass beads are sunk into 60-70% depth of the color printing layer.

During production, glass beads are planted on its surface by using a thermoplastic PE material as carrier to embed a part of the glass beads into the thermoplastic PE material and project the other part of the glass beads on the surface of the thermoplastic PE material, and the glass beads are settled at 30-40% depth of the thermoplastic PE material; a film is plated on the surface of projected glass beads to form a reflective layer, and the film is made of aluminum or silver; ink patterns are printed on the surfaces of the reflective layer and the thermoplastic PE material to form a color printing layer; resin is evenly coated on the surface of the color printing layer to form an elastic resin layer; when the elastic resin layer is half-dried, it is combined with the fabric to form a fabric layer; and after forming, the thermoplastic PE material is peeled off from the glass beads to form the product.

Compared to the prior art, the invention has beneficial effects: on the premise of maintaining the reflective effect, the invention employs a printing method to give the material the color diversity and longer service life, and apply this type of material in production of fashionable clothing better.

### Brief Description of the Drawings

Fig. 1 is the sectional structural representation of the invention;
Fig. 2 is the planar structural representation of the invention;

In the drawings, 1-the fabric layer, 2-the elastic resin layer, 3-the color printing layer, 4-the reflective layer, and 5-the glass beads.

### Description of the Preferred Embodiments

The technical schemes in the examples of the invention will be clearly and fully described below in conjunction with the accompanying drawings in the examples of the invention, and it is obvious that described examples are only a part of examples of the invention, but not all examples. Based on the examples of the invention, all other examples obtained by one of ordinary skill in the art without creative work fall within the scope claimed by the invention.

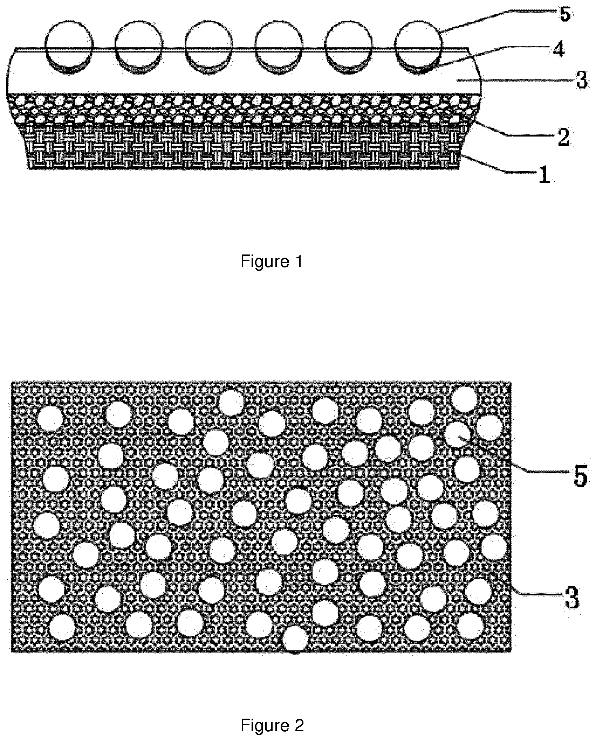

Referring to Fig. 1-2, in the example of the invention, a reflective fabric with color printing and fabrication method thereof, includes glass beads 5, a reflective layer 4, a color printing layer 3, an environment friendly elastic resin layer with environmental protection effect 2, and a fabric layer 1, the back hemispheroid of the glass bead 5 is covered with the reflective layer 4, the glass beads have refractive index between 1.7 and 1.94, the reflective layer 4 is transparent or grey, has thickness of 100-200 Å and is covered on the back surface of the glass bead layer 5. The front surfaces of glass beads form multilayer and multicolor color printing by intaglio printing or silk screen printing or flexography printing or digital printing with transparent ink. The glass beads 5 are planted at 60-70% depth of the color printing layer 3; the elastic resin layer 2 is covered on the surfaces of the glass beads 5 with the reflective layer 4 and the color printing layer 3, the lower part of the elastic resin layer 2 is connected with the fabric layer 1; the reflective fabric with color printing has overall thickness of 175-485µm, wherein the thickness of the fabric layer 1 is 50-300µm, the thickness of the elastic resin layer 2 is 60-115µm, the thickness of the reflective layer 4 is 100-200 Å, the thickness of the color printing layer 3 is 5-10µm, and the diameter of the glass beads 5 is 60µm.

The fabrication process is as follows: the first step, glass beads 5 are planted on its surface by using a thermoplastic PE material as carrier, settlement rate of the glass beads 5 is controlled to embed a part of the glass beads 5 into a thermoplastic PE material and project the other part of the glass beads on the surface of the thermoplastic PE material, and the glass beads 5 are settled at 30-40% depth of the thermoplastic PE material; the second step, a film is plated on the surface of projected glass beads 5 to form a reflective layer 4, and the film is made of aluminum or silver; the third step, ink patterns are printed on the surfaces of the reflective layer 4 and the thermoplastic PE material to form a color printing layer 3; the fourth step, resin is evenly coated on the surface of the color printing layer 3 to form an elastic resin layer 2; the fifth step, the elastic resin layer 2 is combined with the fabric when half-dried to form a fabric layer 1; and the sixth step, after forming, the thermoplastic PE material is peeled off from the glass beads 5 to form the product.

It is obvious for those skilled in the art that the invention is not limited to details of above exemplary examples, and that the invention could be implemented in other specific forms without departing from the spirit or basic characteristics of the invention. Therefore, in all respects, the examples should be considered as exemplary, but not limiting, the scope of the invention is limited by attached claims rather than the above description, thus it is intended that all variations falling within the meaning and scope of equivalent elements of the claims are encompassed in the invention. Any drawing reference signs should not be considered to limit claims involved.

Furthermore, it will be understood that, although the invention is described according to embodiments, not every embodiment comprises only one independent technical scheme, the depiction way of the specification is only for clarity, those skilled in the art should consider the specification as a whole, and technical schemes in various examples could be suitably combined to form other embodiments that could be understood by those skilled in the art.

## Claims

1. A fabrication method of reflective fabric with color printing, the fabrication method including the following steps:
a. solid glass beads (5) having a refractive index between 1.7 and 1.94 are planted on the surface of a thermoplastic PE material, wherein a settlement rate of the solid glass beads (5) is controlled to embed a part of each of the solid glass beads (5) into the thermoplastic PE material and project the other part of each of the solid glass beads (5) on the surface of the thermoplastic PE material;
b. a film is plated on the surface of each of the projecting solid glass beads to form a reflective layer (4), wherein the film is made of aluminum or silver;
c. ink patterns are printed on the surfaces of the reflective layer (4) and the thermoplastic PE material to form a color printing layer (3);
d. resin is evenly coated on the surface of the color printing layer to form an elastic resin layer (2);
e. when the elastic resin layer (2) is half-dried, it is combined with the fabric to form a fabric layer (1); and
f. after forming, the thermoplastic PE material is peeled off from the solid glass beads (5) to form the product;
**characterized in that**
the solid glass beads (5) are glass beads with both ellipticity and devitrification rate less than or equal to 3%.

2. The fabrication method of reflective fabric with color printing according to claim 1, **characterized in that**: in the step a, the solid glass beads (5) are settled at 30-40% depth of the thermoplastic PE material.

3. The fabrication method of reflective fabric with color printing according to claim 1, **characterized in that**: in the step c, the color printing layer (3) is formed by one or more of intaglio printing, silk screen printing, flexography printing, digital printing with transparent ink and combination thereof.

4. A reflective fabric with color printing, including a fabric layer (1), an elastic resin layer (2), a color printing layer (3), and solid glass beads (5) having a refractive index between 1.7 and 1.94, wherein the fabric layer (1) is connected with the elastic resin layer (4), wherein the elastic resin layer (4) is connected with the color printing layer (3), wherein the solid glass beads (5) are embedded in the color printing layer (3), and wherein a reflective layer (4) is set on the surface of the solid glass beads (5) which are embedded in the color printing layer (3);
**characterized in that**
the solid glass beads (5) are glass beads with both ellipticity and devitrification rate less than or equal to 3%.

5. The reflective fabric with color printing according to claim 4, **characterized in that**:
the fabric layer (1) is blend-woven by one or more of polyester cotton, all cotton, terylene, spandex, and acrylon.

6. The reflective fabric with color printing according to claim 4, **characterized in that**:
the elastic resin layer (4) is a thermoplastic polyurethane elastomer layer or an acrylic elastomer layer.

7. The reflective fabric with color printing according to claim 4, **characterized in that**:
the reflective layer is a transparent coated hemispheroid or a grey coated hemispheroid.

8. The reflective fabric with color printing according to claim 7, **characterized in that**:
the reflective layer (4) has a thickness of 100-200 Å.

9. The reflective fabric with color printing according to any one of claims 4 to 8, **characterized in that**: the solid glass beads are sunk into 60-70% depth of the color printing layer.

## Patentansprüche

1. Verfahren zur Herstellung eines reflektierenden Gewebes mit Farbdruck, wobei das Herstellungsverfahren die folgenden Schritte umfasst:
a. feste Glasperlen (5) mit einem Brechungsindex zwischen 1,7 und 1,94 werden auf die Oberfläche eines thermoplastischen PE-Materials aufgebracht, wobei eine Setzungsrate der festen Glasperlen (5) derart gesteuert wird, dass ein Teil von jeder der festen Glasperlen (5) in das thermoplastische PE-Material eingebettet wird und der andere Teil von jeder der festen Glasperlen (5) an der Oberfläche des thermoplastischen PE-Materials vorragt;
b. ein Film wird auf die Oberfläche von jeder der vorragenden festen Glasperlen aufgetragen, um eine reflektierende Schicht (4) zu bilden, wobei der Film aus Aluminium oder Silber hergestellt ist;
c. Tintenmuster werden auf die Oberflächen der reflektierenden Schicht (4) und des thermoplastischen PE-Materials aufgedruckt, um eine Farbdruckschicht (3) zu bilden;
d. Harz wird gleichmäßig auf die Oberfläche der Farbdruckschicht aufgetragen, um eine elastische Harzschicht (2) zu bilden;
e. wenn die elastische Harzschicht (2) halb getrocknet ist, wird sie mit dem Gewebe kombiniert, um eine Gewebeschicht (1) zu bilden; und
f. nach dem Bilden wird das thermoplastische PE-Material von den festen Glasperlen (5) abgezogen, um das Produkt zu bilden;
**dadurch gekennzeichnet, dass**
die festen Glasperlen (5) Glasperlen sind, die sowohl eine Elliptizität als auch eine Entglasungsrate von kleiner oder gleich 3 % aufweisen.

2. Verfahren zur Herstellung eines reflektierenden Gewebes mit Farbdruck nach Anspruch 1, **dadurch gekennzeichnet, dass** sich im Schritt a die festen Glasperlen (5) bei 30 bis 40 % der Tiefe des thermoplastischen PE-Materials setzen.

3. Verfahren zur Herstellung eines reflektierenden Gewebes mit Farbdruck nach Anspruch 1, **dadurch gekennzeichnet, dass** im Schritt c die Farbdruckschicht (3) durch eines oder mehrere aus Tiefdruck, Siebdruck, Flexodruck, Digitaldruck mit transparenter Tinte und Kombinationen davon gebildet wird.

4. Reflektierendes Gewebe mit Farbdruck, umfassend eine Gewebeschicht (1), eine elastische Harzschicht (2), eine Farbdruckschicht (3) und feste Glasperlen (5) mit einem Brechungsindex zwischen 1,7 und 1,94, wobei die Gewebeschicht (1) mit der elastischen Harzschicht (4) verbunden ist, wobei die elastische Harzschicht (4) mit der Farbdruckschicht (3) verbunden ist, wobei die festen Glasperlen (5) in die Farbdruckschicht (3) eingebettet sind und wobei eine reflektierende Schicht (4) auf der Oberfläche der festen Glasperlen (5) aufgebracht ist, die in die Farbdruckschicht (3) eingebettet sind;
**dadurch gekennzeichnet, dass**
es sich bei den festen Glasperlen (5) um Glasperlen handelt, die sowohl eine Elliptizität als auch eine Entglasungsrate von kleiner oder gleich 3 % aufweisen.

5. Reflektierendes Gewebe mit Farbdruck nach Anspruch 4, **dadurch gekennzeichnet, dass**:
die Gewebeschicht (1) ein Mischgewebe aus einem oder mehrerem aus Polyester-Baumwolle, reiner Baumwolle, Terylen, Spandex und Acrylon ist.

6. Reflektierendes Gewebe mit Farbdruck nach Anspruch 4, **dadurch gekennzeichnet, dass** die elastische Harzschicht (4) eine thermoplastische Polyurethanelastomerschicht oder eine Acrylelastomerschicht ist.

7. Reflektierendes Gewebe mit Farbdruck nach Anspruch 4, **dadurch gekennzeichnet, dass** die reflektierende Schicht eine transparente beschichtete Halbkugelform oder eine graue beschichtete Halbkugelform ist.

8. Reflektierendes Gewebe mit Farbdruck nach Anspruch 7, **dadurch gekennzeichnet, dass** die reflektierende Schicht (4) eine Dicke von 100 bis 200 Å aufweist.

9. Reflektierendes Gewebe mit Farbdruck nach einem der Ansprüche 4 bis 8, **dadurch gekennzeichnet, dass** die festen Glasperlen bis zu 60 bis 70 % der Tiefe der Farbdruckschicht eingesunken sind.

## Revendications

1. Procédé de fabrication de tissu réfléchissant avec impression couleur, le procédé de fabrication comprenant les étapes suivantes :
a. des billes de verre solides (5) possédant un indice de réfraction compris entre 1,7 et 1,94 sont plantées sur la surface d'un matériau PE thermoplastique, dans lesquelles un taux de règlement des billes de verre solides (5) est contrôlé pour incorporer une partie de chacune des billes de verre solide (5) à l'intérieur du matériau PE thermoplastique et pour projeter l'autre partie de chacune des billes de verre solide (5) sur la surface du matériau PE thermoplastique ;
b. un film est déposé sur la surface de chacune des billes de verre solides de projection pour former une couche réfléchissante (4), dans lequel le film est constitué d'aluminium ou d'argent ;
c. des motifs d'encre sont imprimés sur les surfaces de la couche réfléchissante (4) et sur le matériau PE thermoplastique pour former une couche d'impression couleur (3) ;
d. de la résine est déposée uniformément sur la surface de la couche d'impression couleur pour former une couche de résine élastique (2) ;
e. lorsque la couche de résine élastique (2) est à moitié sèche, elle est combinée avec le tissu pour former une couche de tissu (1) ; et
f. après formation, le matériau PE thermoplastique est décollé des billes de verre solides (5) pour former le produit ;
**caractérisé en ce que**
les billes de verre solide (5) sont débits de verre dont les taux d'ellipticité et de dévitrification sont tous les deux inférieurs ou égaux à 3 %.

2. Procédé de fabrication de tissu réfléchissant avec impression couleur selon la revendication 1, **caractérisé en ce que** : dans l'étape a, les billes de verre solide (5) sont réglées à une profondeur comprise entre 30 et 40 % du matériau PE thermoplastique.

3. Procédé de fabrication de tissu réfléchissant avec impression couleur selon la revendication 1, **caractérisé en ce que** : dans l'étape c, la couche d'impression couleur (3) est formé par une ou plusieurs de l'impression en relief, de la sérigraphie, de l'impression flexographique, de l'impression digitale avec encre transparente et d'une combinaison de ceux-ci.

4. Tissu réfléchissant avec impression couleur, y compris une couche de tissu (1), une couche de résine élastique (2), une couche d'impression couleur (3), et des billes de verre solides (5) possédant un indice de réfraction compris entre 1,7 et 1,94, dans lequel la couche de tissu (1) est raccordée à la couche de résine élastique (4), dans laquelle la couche de résine élastique (4) est raccordée à la couche d'impression couleur (3), dans laquelle les billes de verre solides (5) sont incorporées dans la couche d'impression couleur (3), et dans laquelle une couche réfléchissante (4) est appliquée sur la surface des billes de verre solide (5) qui sont incorporées dans la couche d'impression couleur (3) ;
**caractérisé en ce que**
les billes de verre solides (5) sont débits de verre dont les taux d'ellipticité et de dévitrification sont tous les deux inférieurs ou égaux à 3 %.

5. Tissu réfléchissant avec impression couleur selon la revendication 4, **caractérisé en ce que** : la couche de tissu (1) est un mélange de tissus par un ou plusieurs des mélanges de coton et de polyester, tout coton, du térylène, le spandex et l'acrylon.

6. Tissu réfléchissant avec impression couleur selon la revendication 4, **caractérisé en ce que** : la couche de résine élastique (4) est une couche d'élastomère de polyuréthane thermoplastique ou une couche d'élastomère d'acrylique.

7. Tissu réfléchissant avec impression couleur selon la revendication 4, **caractérisé en ce que** : la couche réfléchissante est une hémisphéroïde revêtue transparente ou une hémisphéroïde revêtue grise.

8. Tissu réfléchissant avec impression couleur selon la revendication 7, **caractérisé en ce que** : la couche réfléchissante (4) possède une épaisseur comprise entre 100 et 200 Å.

9. Tissu réfléchissant avec impression couleur selon l'une quelconque des revendications 4 à 8, **caractérisé en ce que** : les billes de verre solides sont plongées à une profondeur comprise entre 60 et 70 % de la couche d'impression de couleur.
